(19) Europäisches Patentamt
European Patent Office
Office européen des brevets

(11) **EP 4 421 738 A1**

(12) **EUROPEAN PATENT APPLICATION**

(43) Date of publication:
**28.08.2024 Bulletin 2024/35**

(21) Application number: **23158743.7**

(22) Date of filing: **27.02.2023**

(51) International Patent Classification (IPC):
**G06T 7/73** (2017.01)  **G01C 21/30** (2006.01)
**G01C 21/00** (2006.01)

(52) Cooperative Patent Classification (CPC):
**G06T 7/74; G01C 21/005;** G06T 2207/20081;
G06T 2207/20084; G06T 2207/30252

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **ARSENALI, Bruno**
  **5200 Brugg (CH)**
• **MARANO, Stefano**
  **8050 Zurich (CH)**
• **MAAS, Deran**
  **8046 Zurich (CH)**

(74) Representative: **Sykora & König Patentanwälte PartG mbB**
**Maximilianstraße 2**
**80539 München (DE)**

(54) **METHOD AND SYSTEM FOR DETERMINING A PRECISE VALUE OF AT LEAST ONE POSE PARAMETER OF AN EGO VESSEL**

(57) A method and a system for determining a precise value of at least one pose parameter of an ego vessel (70), on which a camera (24) is arranged, is provided. The method comprises: receiving image data (ID) of an image (40) captured by the camera (24), the image (40) showing at least one solid object (44, 48) and at least one solid object interface (50, 52, 54, 56) between the solid object (44, 48) and the sky (46), or between the solid object (44, 48) and a water surface (42) of a waterbody, on which the ego vessel (70) sails; determining a first representation of the solid object interface (50, 52, 54, 56) from the image data (ID); determining a coarse position of the ego vessel (70) at the time at which the image (40) is captured; determining reference data (RD) based on the coarse position of the ego vessel (70), the reference data (RD) being representative of the solid object interface (50, 52, 54, 56) in the real world (80); determining a second representation of the solid object interface (50, 52, 54, 56) from the reference data (RD); determining a difference between the first representation and the second representation; and determining the precise value of the pose parameter of the ego vessel (70) depending on the difference.

**FIG. 7**

**Description**

FIELD OF THE INVENTION

The invention relates to the field of maritime navigation. In particular, the invention relates to a method and a system for determining a precise value of at least one pose parameter of an ego vessel.

BACKGROUND OF THE INVENTION

The pose of a vessel comprises a position and an orientation of the vessel. The position may be an absolute position of the vessel in the real world and may be described in degrees of longitude and latitude, which may be referred to as position parameters of the vessel. The orientation comprises a pitch, a roll, and a yaw of the vessel, which may be referred to as orientation parameters of the vessel. The position parameters and the orientation parameters may be referred to as pose parameters of the vessel. So, the pose parameters of the vessel may comprise the position parameters and/or the orientation parameters, in particular a pitch angle, a roll angle, and/or a yaw angle of the vessel. The orientation of the vessel may be referred to as attitude of the vessel. In some applications the pose may also comprise a draft of the vessel.

A determination, e.g. an estimation, of the pose of a vessel may be important for many maritime applications, like e.g., dynamic positioning, docking assistance, and it is especially important for a monocular vision system that is used for localization of targets, e.g., other vessels. To be able to estimate the pose of an ego vessel with respect to the sea surface, the position and orientation of the ego vessel with respect to the sea surface have to be known.

The position of the ego vessel, at least a coarse position estimate, may be determined by a GPS receiver of the ego vessel. The orientation of the ego vessel, at least a coarse orientation estimate, may be determined by an on-board inertial measurement unit (IMU) of the ego vessel. However, an appropriate GPS signal is not always receivable and cases of GPS signal corruption are known. Further, the IMUs do not always provide accurate information about the orientation of the ego-vessel with respect to the sea surface. For example, many IMUs do not provide an accurate pitch angle of the ego vessel, especially during long lasting accelerations of the ego vessel.

Hence, an alternative and/or more accurate method and a corresponding system for determining a precise value of at least one pose parameter of an ego vessel are required.

DESCRIPTION OF THE INVENTION

It is an objective of the present invention to provide a method for determining a precise value of at least one pose parameter of an ego vessel, which is very accurate, which does not rely on an IMU of the ego vessel, which may enable to calibrate the IMU of the ego vessel, which may enable to verify a coarse value of the pose parameter estimated by the IMU, and/or which may be carried out in a cost-efficient way, in particular automatically.

It is another objective of the present invention to provide a system for determining a precise value of at least one pose parameter of an ego vessel, which is very accurate, which does not rely on an IMU of the ego vessel, which may enable to calibrate the IMU of the ego vessel, which may enable to verify a coarse value of the pose parameter estimated by the IMU, and/or which may be carried out in a cost-efficient way, in particular automatically.

These objectives are achieved by the subject-matter of the independent claims. Further exemplary embodiments are evident from the dependent claims and the following description.

An objective is achieved by a method for determining a precise value of at least one pose parameter of an ego vessel, on which a camera is arranged. The method comprises: receiving image data of an image captured by the camera, the image showing at least one solid object and at least one solid object interface between the solid object and the sky, or between the solid object and a water surface of a waterbody, on which the ego vessel sails; determining a first representation of the solid object interface from the image data; determining a coarse position of the ego vessel at the time at which the image is captured; determining reference data based on the coarse position of the ego vessel, the reference data being representative of the solid object interface in the real world; determining a second representation of the solid object interface from the reference data; determining a difference between the first representation and the second representation; and determining the precise value of the pose parameter of the ego vessel depending on the difference.

Another objective is achieved by a system for determining the precise value of the at least one pose parameter of the ego vessel, on which the camera is arranged. The system comprises a memory configured for storing the image data of the image, the position data of the ego vessel, and/or the reference data, and a processing unit which is configured for carrying out the above method. Further, the system may comprise the camera or may be a part of the camera. Furthermore, the system may comprise means for receiving the reference data, e.g., via radio and/or satellite communication.

The at least one pose parameter may be one parameter of a group of parameters, the group comprising one or more position parameters, e.g. a latitude and/or longitude where to ego vessel is positioned, and/or one or more orientation parameters, e.g. a pitch and/or a roll and/or a yaw of the ego vessel. The method may be used to determine one or more precise values of one or more of these pose parameters, e.g., one or more precise values of one or more of the orientation parameters, e.g., one or more precise values of the pitch angle and/or one or more precise values of the roll angle. The coarse position may be given by one or more coarse values of the position parameters.

Comparing the solid object interface as given by the reference data with an imaged representation of the solid object interface as shown in the image by comparing the first representation with the second representation enables to provide the precise value of the pose parameter, in particular a precise value of one of the orientation parameters, of the ego vessel, in particular without relying on an IMU of the ego vessel. Further, the precise value of the pose parameter determined by the above method may enable to calibrate the IMU of the ego vessel, and/or to verify a coarse pose estimate of the IMU, wherein the coarse pose estimate may comprise one or more coarse values of one or more of the corresponding pose parameters. Furthermore, the method may be carried out in a cost-efficient way, in particular automatically, e.g. by the above system, wherein embodiments, features, and/or advantages of the method as described above and below may easily be transferred to embodiments, features, and/or advantages of the system as described above and below.

In general, as used in this description, a precise value of a parameter is always more precise than a coarse value of the corresponding parameter. The precise value may be determined by the above method and/or system for determining the corresponding precise value. In contrast, the coarse value of the corresponding parameter may be determined by the GPS and/or, respectively, the IMU of the ego vessel.

Further, that a value of one of the position parameters is precise may mean in this description that the position may have an accuracy of less than 10m, e.g. of less than 5m, e.g. of less than 1m. In contrast, that a value of one of the position parameters is coarse may mean that the value of the position parameter may have an accuracy of more than 1m, e.g. of more than 5m, e.g. of more than 10m. Alternatively or additionally, that a value of one of the pose parameters or the corresponding orientation parameters is precise may mean that the corresponding yaw angle, pitch angle and/or roll angle have an accuracy of less than 0.10°, e.g. of about 0.05°. In contrast, that a value of one of the pose parameters or the corresponding orientation parameters is coarse may mean in this description that the corresponding yaw angle, pitch angle and/or roll angle have an accuracy of more than 0.05°, e.g. of more than about 0.10°.

Optionally, one or more of the above definitions of "precise" and "coarse" may be combined. For example, the precise value of a pose parameter is always more precise than the coarse value of the corresponding pose parameter, independent thereof which further definition is used. For example, a value of a position parameter may be determined as being precise, if the value of the position parameter has an accuracy of less than 5m and if the value of the position parameter is more precise than the coarse value of the position parameter. So, the corresponding coarse position has an accuracy of more than 5m.

The camera may be configured for capturing one or more of the images of surroundings of the ego vessel and for generating the corresponding image data. The camera may be at least one of a group of cameras, the group comprising: a single or monocular camera, a pair of cameras or a stereo camera, a Time-Of-Flight camera, a gated camera, a Pan-Tilt-Zoom camera, and a structured light camera, wherein the cameras may be able to estimate a depth of the objects shown in the image relative to the camera, except for the single or monocular camera.

The image data may be received by the entity carrying out the above method. The entity may be a general-purpose computer, e.g. on the ego vessel, or the system for determining the precise value of the at least one pose parameter of the ego vessel which may be arranged on the ego vessel.

The first representation of the solid object interface may be determined from the image data by image processing techniques and/or a neural network, e.g. as described in the not yet published patent application EP 22 180 131.9. The second representation may be determined from the reference data by image projection techniques and/or by coordinate transformation of the corresponding reference data. In general, an interface between the solid object and the water surface, or between the solid object and the sky may be a physical or a non-physical interface. The physical interface exists in the real world, whereas the non-physical interface exists in the image only, but not in the real world.

The reference data may be determined based on the coarse position of the ego vessel by requesting reference data which are related to the coarse position of the ego vessel and by receiving the corresponding reference data from an entity which comprises the corresponding reference data. The coarse position may be given in the form of coarse values of the position parameters, e.g. based on coarse values of the longitude and the latitude where the ego vessel is positioned. The coarse position of the ego vessel may be determined by the GPS of the ego vessel, if GPS is available. Alternatively or additionally, the coarse position may be estimated in another way, e.g., by a person on the ego vessel who roughly knows where the ego vessel is.

The solid object may be land or another vessel, also referred to as target vessel in the following. In case of land as the solid object, the solid object interface may be a physical land-water interface between the water surface and the land, e.g., a coastline of the land, or a physical land-sky interface between the sky and the land, i.e., a skyline of the land. Alternatively, in case of land as the solid object, the solid object interface may be a non-physical land-water interface between the water surface and the land, e.g., an interface between the water surface and an elevation of the land above the coastline. In case of another vessel as the solid object, the solid object interface may be a physical vessel-water interface between the water surface and the other vessel, e.g., a waterline of the other vessel, or a physical vessel-sky interface between the sky and the other vessel, i.e., a skyline of the other vessel. Alternatively, in case of the other vessel as the solid object, the solid object interface may be a non-physical vessel-water interface between the water surface and a part of the other vessel above the waterline of the other vessel.

The solid object interface in the real world is a 2D line as the corresponding solid object interface in the image. In particular, the interface between the solid object and the water surface or between the solid object and the sky is always a 2D line within the 2D image of the camera, whereas the interface between the solid object and the water surface is always a 3D line in the real world and the interface between the solid object and the sky is always a 3D surface in the real world. However, for the present invention and in the present description, only that part of the 3D line or, respectively, the 3D surface in the real world is used, which corresponds to the 2D imaged solid object interface. Therefore, for the present invention and in the present description, the second representation of the solid object interface is a 2D line, e.g., a coastline, waterline, or skyline, just as the corresponding solid object interface in the image.

The first representation may comprise first data which are representative for one or more first vectors and/or one or more first points, e.g., in the form of first point coordinates, each describing a position and course of the solid object interface in the image. The first data, in particular the first vectors and/or, respectively, the first points may be given in a first coordinate system, e.g. in an image coordinate system of the image. The second representation may comprise second data which are representative for one or more second vectors and/or one or more second points e.g., in the form of second point coordinates, each describing a position and course of the solid object interface in the real world. The second data, in particular the second vectors and/or, respectively, the second points may be given in a second coordinate system, e.g. in a real-world coordinate system.

The difference may be any mathematical concept appropriate for describing or defining a deviation of the first representation from the second representation For example, the difference may be given by one or more distances of one or more of the first points to the corresponding second points.

The above method may be carried out several times. For example, the above method may be carried out as a loop, wherein the results, i.e. the precise value of the pose parameter, of one of the loops may be used as an input and/or starting point for the next loop, i.e. as the coarse value of the pose parameter, in particular the coarse position, e.g., the coarse value(s) of the position parameter(s). So, the accuracy of the precise value of the pose parameter may increase from one loop to the next. The loop may comprise an optimization algorithm, e.g. a non-linear optimization algorithm. The above method, i.e. the loop, may be carried out until a predetermined condition is fulfilled, e.g., until the difference is smaller than a predetermined difference threshold. In other words, the steps of the method may be repeatedly carried out until the predetermined condition is fulfilled. For each loop of the method, a new image may be captured by the camera and received by the system for determining the precise value of the pose parameter, a new first representation may be determined from the image, and a corresponding new second representation may be extracted from new reference data which may be determined based on the precise value of the corresponding pose parameter of the previous loop. So, the precise value of the pose parameter may be determined by adjusting the coarse value of the pose parameter such that the difference is reduced, e.g. minimized. When the method is carried out for the first time, the coarse position, i.e., the coarse value(s) of the position parameter(s), may be received from the GPS of the ego vessel and may be adjusted in order to determine the precise value of the pose parameter, in particular the precise value(s) of the position parameter(s) and/or the precise value(s) of the orientation parameter(s), of the ego vessel.

According to an embodiment, the determining of the difference between the first representation and the second representation comprises transferring the first representation and/or the second representation into the same coordinate system, and determining a misfit function between the first representation and the second representation within the coordinate system as the difference; and the precise value of the pose parameter of the ego vessel is determined depending on the difference by adjusting a predetermined coarse value of the pose parameter of the ego vessel such that the difference is reduced., e.g. minimized. In general, the coarse value of the pose parameter of the ego vessel may be adjusted such that the difference is reduced by adjusting the coarse value of the pose parameter such that the misfit function is reduced, e.g. minimized. Alternatively, a cost function may be used instead of the misfit function. The "same" coordinate system may be the real-world coordinate system given by the reference data, the image coordinate system given by the image, and/or the camera coordinate frame of the camera, or another coordinate system used for determining the difference only.

According to an embodiment, the predetermined coarse value of the pose parameter is adjusted such that the misfit function is minimized. In case of the usage of the cost function, the difference may be reduced by reducing, e.g., minimizing, the costs of the cost function.

According to an embodiment, a coarse value of at least one of the orientation parameters of the ego vessel is determined and the reference data may be determined based on the coarse value of the corresponding orientation parameter of the ego vessel. The coarse value of at least one of the orientation parameters of the ego vessel may be determined by the IMU and/or may be referred to as coarse orientation or coarse orientation estimate. The coarse orientation of the ego vessel and the coarse position of the ego vessel may be summarized as coarse pose of the ego vessel. So, the reference data may be determined based on the coarse pose of the ego vessel. For example, the coarse position of the ego vessel may comprise a course value of the longitude and/or a course value of the latitude at a position of the ego vessel, whereas the coarse orientation of the ego vessel may comprise one or more coarse values of the yaw angle, the pitch angle, and/or the roll angle of the ego vessel. The coarse value of the pose parameter may be seen as a starting point for the determination of the precise value of the pose parameter of the ego vessel. In this case, the coarse orientation may be stored in the memory in advance, e.g. as fixed starting values, e.g. by a manufacturer of the system. Alternatively, a "best guess" orientation may be used as a starting point when carrying out the above method. When the method, i.e. the loop, is carried out for the second or further times during one pose determination, the precise orientation resulting from one of the loops may be the coarse orientation for the next loop.

According to an embodiment, the first representation is representative for a pathway of the solid object interface within the image; and/or the second representation is representative for a pathway of the solid object interface within the real world. The first representation may include a form and a position of the pathway of the solid object interface within the image, in particular the coordinates of the corresponding pixels within the image, e.g., in the image coordinate system. The second representation may include a form and a position of the pathway of the solid object interface within the real world, in particular the coordinates of several points along the pathway of the solid object interface within the real world, e.g., in the form of values of longitude and latitude.

According to an embodiment, when determining the first representation from the reference data, those parts of the solid object interface which were visible from the camera at the time the image was captured are determined as the first representation only. The solid object may comprise a solid object interface to the water surface or to the sky which is not visible from the camera. Therefore, the image may not show a solid object interface corresponding to that solid object interface in the real world. Determining those parts of the solid object interface which are visible from the camera in the real world and determining the difference based on the visible parts of the solid object interface only may contribute to solve this issue. The parts of the solid object interface, which were visible from the camera at the time the image was captured, may be referred to as visible solid object interface, e.g., as visible vessel-water interface or visible land-water interface.

According to an embodiment, the method comprises determining a positional relationship between the camera and the solid object interface from the reference data; and determining the parts of the solid object interface which are visible from the camera depending on the determined positional relationship. The positional relationship may be determined by transferring a position of the camera and the solid object interface into the same coordinate system, e.g. a 2D coordinate system, e.g., the camera coordinate system or the real-world coordinate system. For example, the reference data may comprise 2D data, e.g. a 2D map data, or 3D data, e.g. 3D map data, which are transferred into the 2D data, e.g. the 2D map data, and the position of the camera may be transferred into the corresponding 2D map. Then, the positional relationship may be extractable and/or visible from the 2D map comprising a representation of the solid object interface, e.g. the second representation, and the position of the camera. The positional relationship may be defined by one or more distances between the position of the camera and one or more points, e.g., point coordinates, along the representation of the solid object interface, e.g. the second representation, within the corresponding 2D map.

According to an embodiment, the reference data comprise 2D map data representing a 2D map of surroundings of the ego vessel. The 2D map data may comprise 2D coordinates of one or more land polygons corresponding to one or more coastlines at the waterbody. The 2D map data may be obtain from digital electronic maps, e.g. OpenStreetMap.

According to an embodiment, the parts of the solid object interface which are visible from the camera are determined from the 2D map data depending on the determined positional relationship between the camera and the solid object interface by ray casting. The ray casting may be a 2D uniform ray casting. The ray casting may contribute to determine the parts of the solid object interface which are visible from the camera in an easy and/or accurate manner.

According to an embodiment, the reference data comprise AIS data. The AIS data may comprise vessel-related information about one or more other vessels which are close to the ego vessel. In particular, the AIS data may relate to at least one other vessel in the waterbody, wherein the other vessel may be used as the solid object. The vessel-related information may comprise a unique identifier, a geo-position, a course over ground, and a speed over ground of the other vessel. Further, the AIS data may comprise an extent of the other vessel in relation to a geo-location of its GPS receiver. This enables to take the extent of the other vessel in relation to the geo-location of its GPS receiver into account when using the corresponding solid object interface, i.e., the vessel-water interface between the other vessel and the water surface, for determining the precise value of the pose parameter, in particular the precise value of the orientation parameter of the ego vessel.

According to an embodiment, the AIS data comprise the geo-location of the GPS receiver of the other vessel and an extent of the other vessel in relation to the geo-location of the GPS receiver of the other vessel; an estimated vessel-water interface between the water surface and the other vessel is estimated from the extent and the geo-location of the GPS receiver of the other vessel; the parts of the vessel-water interface which are visible from the camera are determined depending on the estimated vessel-water interface and a position of the camera; and the visible parts of the vessel-water interface are used as the second representation. This contributes to a very accurate determination of the precise value of the pose parameter of the ego vessel. The vessel-water interface may be determined by constructing a bounding box in which the other vessel fits, e.g. perfectly fits, depending on the extent of the other vessel and by constructing an ellipse which fits, e.g. perfectly fits, into the bounding box, wherein the ellipse is transferred into the real-world coordinate system and is used as the vessel-water interface. Similarly, other geometrical shapes that model more accurately the outline of the vessel may be used beside the ellipse.

According to an embodiment, the reference data comprise elevation map data of the land abutting on the waterbody. This enables to determine the solid object interface, in particular the land-sky interface. The elevation map data may be representative of a 3D map and/or topography of the land and may be referred to as Digital Elevation Model as it is known in the art.

According to an embodiment, the parts of the solid object interface which are visible from the camera are determined from the elevation map data by generating a textureless rendered image and by determining the second representation from the textureless rendered image. The textureless rendered image may be generated as a synthetic view of the land surrounding the waterbody and/or by a renderer under consideration of given calibration values of the camera and the coarse value(s) of the position parameter(s) of the ego vessel. The textureless rendered image may comprise the sky, the land, and the water surface in distinct colours. Then, the visible parts may be extracted by image processing as it is known in the art.

According to an embodiment, the image shows at least a part of the horizon between the water surface and the sky, a third representation of the horizon is determined from the image data, the reference data are representative of the horizon in the real world, a fourth representation of the horizon is determined from the reference data; and a difference between the third representation and the fourth representation is determined. The fourth representation may be determined from the reference data in a similar way as the second representation is determined from the reference data. For example, horizon data, which are representative for a pathway of the horizon in the real world, may be extracted from the reference data for determining the fourth representation.

The difference between the first and second representation and the difference between the third and fourth representation may refer to the same difference. This may mean that all four representations may be determined, the first and third representations may be combined as image representations and the second and fourth representations may be combined as real-world representations, and the difference is determined by determining the difference between the image representations and the real-world representations. Alternatively, the difference between the first and second representation may be regarded as first difference and the difference between the third and fourth representation may be regarded as second difference. Then, the precise value of the pose parameter may be determined depending on the first difference in a first step and may be determined even more accurately depending on the second difference in a next step, for example. These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a block diagram illustrating an exemplary embodiment of a system for determining a precise value of at least one pose parameter of an ego vessel;

Fig. 2 shows an example of an image showing another vessel in a waterbody;

Fig. 3 shows an exemplary picture of the real world;

Fig. 4 shows an example of a visualization of an estimated vessel-water interface estimated from AIS data;

Fig. 5 illustrates a principle for determining parts of the estimated vessel-water interface which are visible from the camera; and

Fig. 6 shows a flow-chart of an exemplary embodiment of a method for determining the precise value of at least one pose parameter of the ego vessel;

Fig. 7 illustrates a principle of the method for determining the precise value of the pose parameter of the ego vessel according to figure 6.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

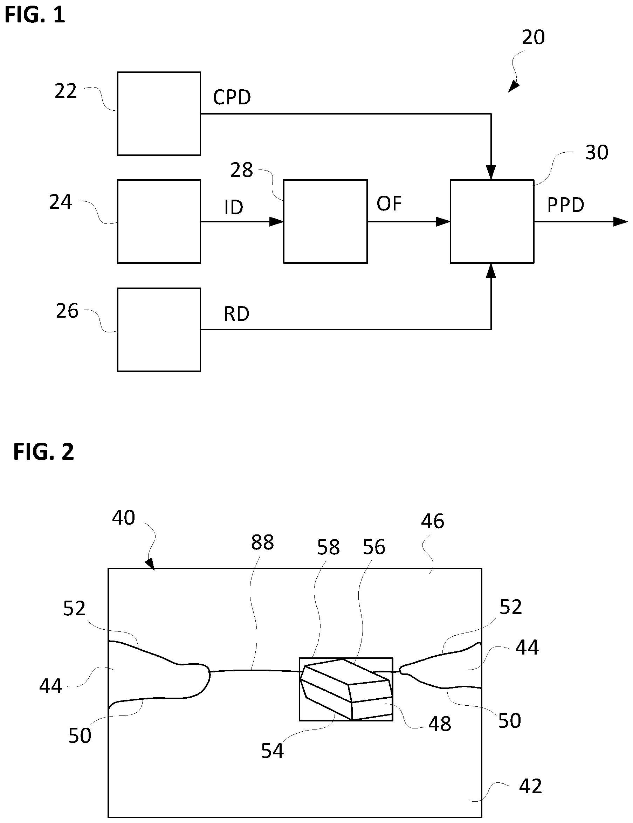

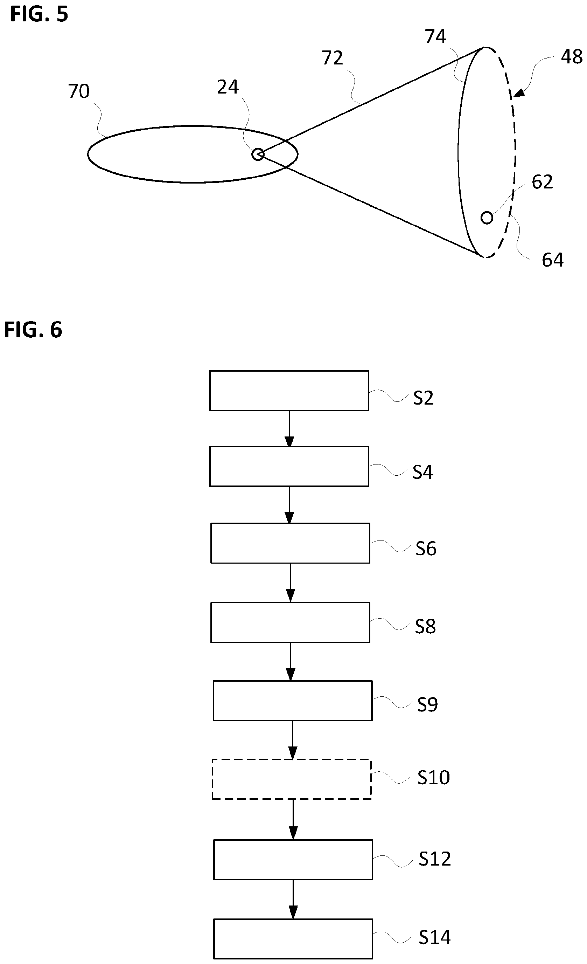

Fig. 1 shows a block diagram illustrating an exemplary embodiment of a system 20 for determining a precise value of at least one pose parameter of an ego vessel 70 (see figure 5), on which a camera 24 is arranged. The system 20 may comprise a positioning device 22 for determining coarse pose data CPD of the ego vessel 70, the camera 24 for generating image data ID of an image 40 (see figure 2), an acquisition component 26 for acquiring reference data RD, an extracting component 28 for determining, e.g., extracting, orientation features OF from the image data ID, and a processing unit 30 for determining precise pose data PPD, which are representative for the precise value of the at least one pose parameter of the ego vessel 70, depending on the coarse pose data CPD, the orientation features OF, and the reference data RD. In addition, the system 20 may comprise a memory (not shown) configured for storing the coarse pose data CPD, the image data ID, the reference data RD, the orientation features OF, and/or the precise pose data PPD. The processing unit 30 is configured for carrying out a method for determining the precise value of the pose parameter of the ego vessel 70, e.g., as described with respect to figure 6.

The camera 24 is configured for capturing one or more images 40 of surroundings of the ego vessel 70 and for generating the corresponding image data ID. The positioning device 22 may be configured for determining a coarse pose of the ego vessel 70 at the time at which the image 40 is captured and for generating the corresponding coarse pose data CPD. The coarse pose may comprise a coarse position and a coarse orientation of the ego vessel 70. In particular, the positioning device 22 may be configured for determining the coarse position of the ego vessel 70 at the time at which the image 40 is captured and for encoding the determined coarse position in coarse position data which may be a part of the coarse pose data CPD. In this context, the positioning device 22 may comprise a GPS receiver (not shown) of the ego vessel 70 which may be used for determining the coarse position and for generating the corresponding coarse position data. Optionally, the positioning device 22 may additionally be configured for determining the coarse orientation of the ego vessel 70 at the time at which the image 40 is captured and for encoding the coarse orientation in coarse orientation data which may be a part of the coarse pose data CPD. In this context, the positioning device 22 may comprise an IMU unit of the ego vessel 70 which may be used for determining the coarse orientation and for generating the corresponding coarse orientation data. The coarse orientation of the ego vessel may be defined by a course yaw angle, a course pitch angle, and/or a course roll angle of the ego vessel, which may be encoded in the coarse orientation data.

The pose of a vessel may comprise a position and an orientation of the ego vessel 70, wherein the orientation may comprise a pitch, a roll, and a yaw of the ego vessel 70. The pose may be described by one or more pose parameter. In particular, the position may be described by one or more position parameters and/or the orientation may be described by one or more orientation parameters. The orientation parameters may comprise a pitch angle, a roll angle, and/or a yaw angle of the ego vessel 70. The position may be an absolute position of the ego vessel in the real world and may be described in degrees of longitude and latitude, which may be the position parameters of the ego vessel 70. So, the pose parameters of the ego vessel 70 may comprise the position parameters and/or the orientation parameters, in particular the pitch angle, the roll angle, and/or the yaw angle of the ego vessel 70. The orientation of the ego vessel 70 may be referred to as attitude of the ego vessel 70. In some applications the orientation may also comprise a draft of the ego vessel 70.

Accordingly, the coarse pose may be described by the coarse pose data CPD which may comprise the coarse pose parameters. The coarse pose data CPD may comprise the coarse position data and/or coarse orientation data. The coarse position data may comprise coarse values of the position parameters, e.g., a coarse value of the longitude and a coarse value of the latitude. Further, the coarse orientation data may comprise the coarse values of one or more of the orientation parameters, e.g. a coarse value of the pitch angle, and/or a coarse value of the roll angle, and/or a coarse value of the yaw angle.

In contrast, the precise pose may be described by the precise pose data PPD which may comprise precise pose parameters. The precise pose data PPD may comprise precise position data and/or precise orientation data. The precise position data may comprise precise values of the position parameters, e.g., a precise value of the longitude and a precise value of the latitude. Further, the precise orientation data may comprise the precise values of one or more of the orientation parameters, e.g. a precise value of the pitch angle, and/or a precise value of the roll angle, and/or a precise value of the yaw angle.

The extracting component 28 is configured for determining, e.g., extracting, the orientation features OF from the image data ID, i.e., at least one solid object interface which is shown the image 40. The acquisition component 26 may be configured for acquiring the reference data RD from the memory of the system 20 or from an external source, e.g., via satellite, radio, and/or the internet, based on an estimate of the coarse position, which may be carried out by the GPS receiver of the ego vessel 70. The acquisition component 26 may comprise another extracting component (not shown) for determining, e.g., extracting, at least one solid object interface from the reference data RD.

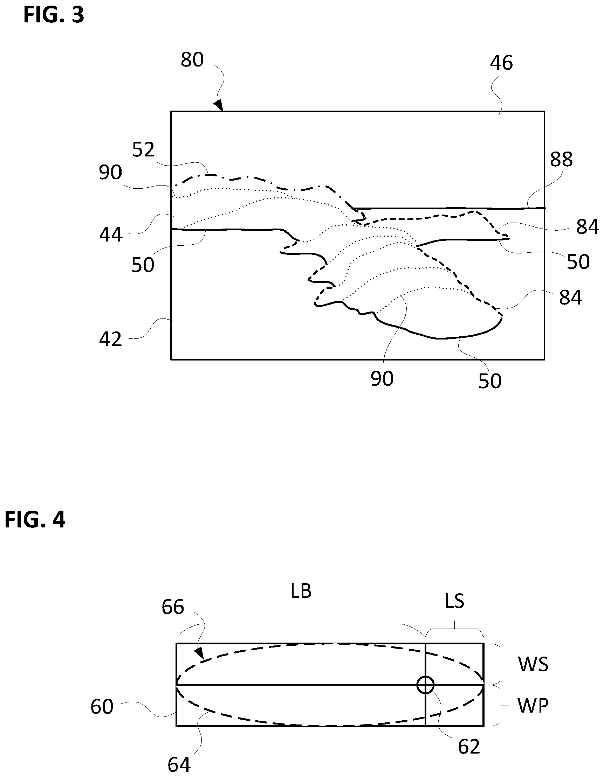

The reference data RD are representative of the at least one solid object interface in the real world 80 (see figures 2 and 3) corresponding to the solid object interface in the image 40, wherein the solid object interface is between the corresponding solid object and the sky 46 or, respectively, between the corresponding solid object and the corresponding water surface 42 of a waterbody. The waterbody may be a lake, an ocean, a sea, or a river. The processing unit 30 is configured for receiving the image data ID and the reference data RD, for determining a first representation of the solid object interface as shown in the image 40 and a second representation of the solid object interface as given by the reference data RD, for determining a difference between the first representation and the second representation, and for determining the precise value of at least one of the pose parameters and for generating the corresponding precise pose data PPD depending on the difference.

The function(s) and/or operation of the system 20 are explained below in more detail with respect to the method carried out by the system 20, wherein the steps of the method shown in figure 6 are explained with the help of figures 2 to 5.

Fig. 2 shows an example of the image 40 showing another vessel 48, which may be seen from the ego vessel 70 and which may also sail on the waterbody. The other vessel 48 may be referred to as target vessel. The waterbody may be represented within the image 40 by an water surface 42 of the waterbody shown in the image 40. The image 40 may show the water surface 42, land 44, e.g. two imaged spits of land, the sky 46, the other vessel 48, and a bounding box 58 surrounding the other vessel 48 in the image 40.

The image 40 may show at least one solid object and at least one solid object interface between the solid object and the sky 46, or between the solid object and the water surface 42 of the waterbody, on which the ego vessel 70 sails. For example, the solid object may be the land 44 or the other vessel 48. In case of the land 44 as the solid object, the solid object interface may be a land-water interface 50 between the water surface 42 and the land 44, i.e., a coastline of the land 44, or an land-sky interface 52 between the sky 46 and the land 44, i.e., a skyline of the land 44. In case of the other vessel 48 as the solid object, the solid object interface may be a vessel-water interface 54 between the water surface 42 and the other vessel 48, i.e., a waterline of the other vessel 48, or a vessel-sky interface 56 between the sky 46 and the other vessel 48, i.e., a skyline of the other vessel 48.

Fig. 3 shows an exemplary picture of the real world 80, e.g., given by the reference data RD, e.g., by an elevation map. The part of the real world 80 which is shown in the picture of figure 4 does not correspond to the part of the real world 80 shown in the image 40 and is shown in order to describe at least some of the solid object interfaces usable for the present invention. In general, the solid object interface is between the corresponding solid object and the sky 46 or, respectively, between the corresponding solid object and the water surface 42 of the waterbody. In this example, the solid object may be the land 44 or the other vessel 48 (not shown in figure 3). In case of the land 44 as the solid object, the solid object interface may be the land-water interface 50 (continuous line) between the water surface 42 and the land 44, e.g., a coastline of the land 44 also referred to as physical land-water interface, or a non-physical land-water interface 84 (dashed line) between the water surface 42 and the land 944, e.g., a line between an elevation of the land 44 and the water surface 42. The latter interface may be referred to as non-physical land-water interface 84, because it is only a land-water interface when seen from the ego vessel 70, in particular from the camera 24, but not in the real world. Alternatively, the solid object interface may be the land-sky interface 52 (dashed-dotted line) between the sky 46 and the land 44, i.e., a skyline of the land 44. In case of the other vessel 48 as the solid object, the solid object interface may be the vessel-water interface 54 between the water surface 42 and the other vessel 48, e.g., a waterline of the other vessel 48, or the vessel-sky interface 56 between the sky 46 and the other vessel 48, i.e., a skyline of the other vessel 48.

So, the reference data RD may comprise elevation map data of the land 44 surrounding the waterbody. The elevation map data may be representative of a 3D map and/or topography of the land 44 and may be referred to as Digital Elevation Model (DEM) as it is known in the art. In this case, the parts of the solid object interface 50, 52, 54, 56 which are visible from the camera 24 may be determined from the elevation map data by generating a textureless rendered image and by determining, e.g., extracting, the parts of the solid object interface 50, 52, 54, 56 which are visible from the camera 24 from the textureless rendered image. The textureless rendered image may be generated as a synthetic view of the land 44 surrounding the waterbody and/or by a renderer, e.g., under consideration of given calibration values of the camera 24 and the pose, e.g., an estimation of the coarse pose, of the ego vessel 70. The textureless rendered image may comprise representatives of the sky 46, the land 44, and the water surface 42 with distinct properties, e.g., in distinct colours. Then, the visible parts of the solid object interface 50, 52, 54, 56 which are visible from the camera 24 may be extracted by image processing as it is known in the art. The extracted solid object interface 50, 52, 54, 56, in particular the visible parts of the real solid object interface 50, 52, 54, 56, may be projected onto the image 40 and may be used for determining the difference between the solid object interface 50, 52, 54, 56 as shown in the image 40 and the solid object interface 50, 52, 54, 56 as given by the reference data RD.

Fig. 4 shows an example of a visualization of a vessel-water interface estimated from AIS data, i.e., an estimated vessel-water interface 64. The extent of the corresponding other vessel 48 may be given by a width to starboard WS, a width to port WP, a length to bow LB, and/or a length to stern LS, each related to the position of a GPS receiver 62 of the other vessel 48. The estimated real vessel-water interface 64 may be determined by constructing an AIS bounding box 60 in which the other vessel 66 fits, e.g. perfectly fits, depending on the extent of the other vessel 48 and by constructing an ellipse which fits, e.g. perfectly fits, into the AIS bounding box 60, wherein the ellipse may correspond to the estimated vessel-water interface 64, may be transferred into the real-world coordinate system, and may be used as the vessel-water interface 54. Alternatively, another form than the ellipse may be used to estimate the vessel-water interface. Further, the shape extracted from the AIS data may be reinforced with corresponding information from a radar and/or lidar measurement.

So, the estimated vessel-water interface 64 between the water surface 42 and the other vessel 48 may be estimated from the extent and the geo-location of the other vessel 48 in the real world corresponding to the other vessel 48 in the image 40. Those parts of the estimated vessel-water interface 64 which are visible from the camera 24 may be determined depending on the estimated real vessel-water interface 64 and the position of the camera 24. The estimated vessel-water interface 64, in particular the visible parts of the estimated vessel-water interface 64, may be projected on the image 40 and may be used for determining the difference between the solid object interface 50, 52, 54, 56 as shown in the image 40 and the solid object interface 50, 52, 54, 56 as given by the reference data RD.

Fig. 5 illustrates a principle for determining the parts of the estimated vessel-water interface 64 which are visible from the camera 24, i.e., a visible vessel-water interface 74, and which are shown in figure 5 by a continuous line. The camera 24 is arranged on the ego vessel 70. The camera 24 has a field of view 72 in which the estimated real vessel-water interface 64 is located, wherein the field of view 72 may be larger than depicted in figure 5, in particular larger than the estimated real vessel-water interface 64. As may be seen from figure 5, the visible vessel-water interface 74 is visible from the camera 24, whereas the rest of the estimated real vessel-water interface 64 (dashed line) is not visible from the camera 24. Therefore, the visible vessel-water interface 74 may be used for determining the precise pose data PD only. Numerical methods may be used to distinguish between the visible vessel-water interface 74 and the rest of the estimated vessel-water interface 64. For example, one may define points on the whole estimated vessel-water interface 64 and line segments that connect the points to the camera centre. Then, the points of the estimated vessel-water interface 64 with the associated line segments that do not intersect other parts of the estimated vessel-water interface 64 belong to the visible vessel-water interface 74. The visible vessel-water interface 74 may be determined by ray casting. A similar approach may be used for determining the visible parts of the other solid object interfaces 50, 52, 54, 56.

Fig. 6 shows a flow-chart of an exemplary embodiment of the method for determining the precise value of the at least one pose parameter of the ego vessel 70, on which the camera 24 is arranged. The ego vessel 70 may sail on the waterbody.

In a step S2, the image data ID of the image 40 captured by the camera 24 are received. The camera 24 may generate the image data ID representing the image 40. The image data ID may be sent to and/or may be received by the system 20, in particular the processing unit 30, carrying out the method for determining the precise value of the pose parameter of the ego vessel 70. The image data ID may be stored in the memory of the system 20, wherein the memory is coupled to the processing unit 30. When the method is carried out, the processing unit 30 may receive the image data ID from the camera 24 directly or from the memory. The camera 24 may be calibrated with respect to a position and/or orientation of the camera 24 relative to the ego vessel 70, wherein corresponding calibration values of the camera 24 may be known, in other words "given in advance", or short "given".

In a step S4, a first representation of the solid object interface, i.e., the land-water interface 50, the land-sky interface 52, the vessel-water interface 54, or the vessel-sky interface 56, may be determined from the image 40, in particular from the image data ID, e.g., by the extracting component 28. The determination of the first representation from the image data ID may be a determination of a pathway of the solid object interface 50, 52, 54, 56 within the image 40. The pathway of the solid object interface 50, 52, 54, 56 may include a form and a position of the solid object interface 50, 52, 54, 56 within the image 40, wherein the image data ID may comprise the pixel coordinates of the corresponding pixels of the image 40. In case of the vessel-water interface 54 being used as the solid object interface, the bounding box 58 may be determined for determining the solid object interface 50, 52, 54, 56, in particular the corresponding pixel coordinates, and the pathway of the solid object interface 50, 52, 54, 56 may be searched within the bounding box 58 only.

The extracting component 28 may comprise a first neural network which may receive the image data ID and which may be configured for determining the first representation from the image data ID. For example, if the first representation refers to the vessel-water interface 54 as the solid object interface, the first representation may be determined from the image data ID by determining at least one vessel-water-sky value for each pixel of the image 40 from the image data ID, wherein the vessel-water-sky values may be representative for a probability of the corresponding pixel showing the corresponding solid object, in this case the other vessel 48, the water surface 42, or, respectively, the sky 46. Then, the first representation may be determined from the vessel-water-sky values by one or more post-processing steps, e.g., by edge detection and/or thresholding of the vessel-water-sky values.

The vessel-water-sky values may be determined by semantic segmentation of the image 40. The semantic segmentation may be carried out by the first neural network which may have been trained on differentiating between solid objects, water surface, and sky in images, e.g. by supervised learning using correspondingly labelled images. For example, the first neural network may be trained in advance by supervised learning using an amount of images 40 showing imaged solid objects, e.g., other vessels 48 on waterbodies or the land 44 interfacing the waterbodies, and by the images 40 being labelled with respect to the corresponding water surfaces 42, skies 46, and other vessels 48. In addition, images 40 not showing any solid objects may also be involved in the training of the first neural network.

A method for determining a solid object interface, in particular a vessel-water interface, from an image which may be used in this context is known from and described in detail in the not yet published patent application EP 22 180 131.9. Although this patent application focuses on the determination of the vessel-water interface only, the corresponding method may be easily expanded to the determination of solid object interfaces in general by a person skilled in the art, e.g., by training the first neural network such that it is able to determine the other solid object interfaces, i.e., the land-water interface 50, the land-sky interface 52, or the vessel-sky interface 56.

In a step S6, the coarse position of the ego vessel 70 at the time at which the image 40 is captured is determined. The determining of the coarse position of the ego vessel 70 may comprise a receiving of the corresponding coarse pose data CPD, which are representative of the coarse pose of the ego vessel 70 and thereby of the coarse position of the ego vessel 70, or the corresponding coarse position data, which are representative of the coarse position of the ego vessel 70 only. The coarse position may be determined from the positioning device 22, in particular from the GPS receiver of the ego vessel 70.

In a step S8, the reference data RD are determined based on the coarse position of the ego vessel 70. For example, only those reference data RD may be received and/or considered in the following, which refer to the surroundings of the ego vessel 70 at the determined coarse position of the ego vessel 70. The reference data RD are representative of at least one of the solid object interfaces 50, 52, 54, 56 in the real world 80 corresponding to the solid object interface 50, 52, 54, 56 as shown in the image 40. The reference data RD may comprise a pathway of the solid object interface 50, 52, 54, 56 in the real world 80. The pathway of the solid object interface 50, 52, 54, 56 may include a form and a position of the solid object interface 50, 52, 54, 56 within the real world 80. For example, real world coordinates of the pathway of the solid object interface 50, 52, 54, 56 may be encoded within the reference data RD.

In a step S9, a second representation of the solid object interface 50, 52, 54, 56, in particular of the pathway of the solid object interface 50, 52, 54, 56, is determined, e.g., extracted from the reference data RD, e.g. by the above extracting component 28. The second representation basically corresponds to the orientation features OF, i.e., the corresponding solid object interface 50, 52, 54, 56 as determined from the image data ID except for the difference described below. The way of determining the solid object interface 50, 52, 54, 56 may depend on the kind of reference data RD which may be used. For example, if the reference data RD comprise a 2D map of the surroundings of the ego vessel 70, the solid object interface 50, 52, 54, 56 may correspond to a coastline represented in the 2D map, and the solid object interface 50, 52, 54, 56 may be determined from the corresponding 2D map by simply extracting the corresponding coordinates from the 2D map. Alternatively, if the reference data RD comprise AIS data, e.g., as explained above with respect to figure 4, the solid object interface 50, 52, 54, 56 may correspond to a waterline of the corresponding other vessel 48, with the waterline being determined from the AIS data, as explained above with respect to figure 4. Alternatively, if the reference data RD comprise elevation map data, e.g., as explained with respect to figure 3, the solid object interface 50, 52, 54, 56 may correspond to the skyline of the corresponding land 44, or to a physical or non-physical landwater interface 50, 84, as explained above.

In an optional step S10, the parts of the solid object interface 50, 52, 54, 56 which are visible from the camera 24 may be determined, e.g., as explained above with respect to figure 5. The solid object, e.g., the land 44, may comprise a solid object interface to the water surface 42 or to the sky 46 which is not visible from the camera 24. Therefore, the image 40 may not contain and/or show a solid object interface corresponding to that solid object interface in the real world. For example, the show a part of the coastline of the land 44 which is visible from the camera 24, i.e., the land-water interface 50, but not a part of the coastline of the land 44, which is covered by the elevation of the land 44. Therefore, the land-water interface 50 is interrupted by the non-physical land-water interface 84. The non-physical land-water interface 84 does not comprise the coastline of the real land 44, but only a 2D line between the water surface 42 and the elevation of the land 44 as it is seen from the ego vessel 70. Further, only a part of the skyline of the land 44 may be visible from the camera 24, e.g., the land-sky interface 52 as shown in figure 3. The parts of the solid object interface 50, 52, 54, 56 which are visible from the ego vessel 70, in particular the camera 24, may be determined by ray casting, e.g., as explained above with respect to figure 5.

In an optional step S12, which particularly may be carried out after the optional step S10 has been carried out, a positional relationship between the camera 24 and the solid object interface may be determined from the reference data RD. In this case, the parts of the real solid object interface 50, 52, 54, 56 which are visible from the camera 24 may be determined depending on the determined positional relationship. The positional relationship may be determined by transferring the position of the camera 24 and the solid object interface 50, 52, 54, 56 into the same coordinate system, e.g. a 2D coordinate system, by any appropriate coordinate transfer method known in the art. For example, the reference data RD may comprise 2D data, e.g. a 2D map data, or 3D data, e.g. 3D map data, which may be transferred into the 2D data, e.g. the 2D map data. Then, the position of the camera 24 may be transferred into the corresponding 2D map. Afterwards, the positional relationship may be extractable and/or visible from the 2D map comprising a representation of the solid object interface 50, 52, 54, 56, e.g., the second representation, and the position of the camera 24. The positional relationship may be defined by one or more distances between the position of the camera 24 and one or more points along the representation of the solid object interface 50, 52, 54, 56 within the corresponding 2D map. So, the reference data RD may comprise 2D map data representing a 2D map of surroundings of the ego vessel 70, in particular of the camera 24. The 2D map data may comprise 2D coordinates of one or more land polygons corresponding to one or more coastlines at the waterbody. The 2D map data may be obtained from OpenStreetMap.

The 2D map data may also be used for determining the second representation of the solid object interface 50, 52, 54, 56, in particular of the visible solid object interface 50, 52, 54, 56, from the corresponding 2D map. The determined second representation may be projected on the image 40.

Alternatively, the reference data RD may comprise the AIS data. In general, the AIS data may comprise vessel-related information about one or more other vessels which are close to the ego vessel 70. In particular, the AIS data may comprise a geo-location of the GPS receiver 62 of the other vessel 48 in the real world corresponding to the other vessel 48 in the image 40. The vessel-related information may comprise a unique identifier, a course over ground, and a speed over ground of the other vessel 48, and the geo-location of its GPS receiver 62. Further, the AIS data may comprise the extent of the other vessel 48 in relation to the geo-location of its GPS receiver 62.

In a step S12, the difference between the first representation of the solid object interface 50, 52, 54, 56 and the second representation of the solid object interface 50, 52, 54, 56 is determined. The difference may be any mathematical concept appropriate for describing or defining a deviation of the first representation from the second representation. In particular, the difference may be computed. For example, the difference may be given by one or more distances of one or more points along the first representation of the solid object interface 50, 52, 54, 56, e.g., of the pathway of the solid object interface

50, 52, 54, 56, and the corresponding points along the second representation of the solid object interface projected on the image 40, e.g., of the pathway of the solid object interface 50, 52, 54, 56 projected on the image 40. In general, the difference between the first representation and the second representation may correspond to a difference between the pathway of the solid object interface as shown in the image 40 and the pathway of the solid object interface in the real world transferred into the same coordinate system, e.g., the image coordinate system. The determining of the difference between the first representation and the second representation may comprise transferring the first representation and/or the second representation into the same coordinate system and determining a misfit function between the first and second representation within the coordinate system as the difference.

For example, the orientation features OF extracted from the image 40, i.e., the coordinates of one or more of the above solid object interfaces 50, 52, 54, 56, may be given by

$$\{z_j\}_{j=1}^M$$

with z representing coordinates of the points from which the solid object interface 50, 52, 54, 56 is formed within the image 40, and with j and M each being natural numbers. Thus, the orientation features OF and the corresponding solid object interface 50, 52, 54, 56 as shown in the image 40 may be represented as sets of points.

Another set of points, which are represented in the world coordinates, may be obtained from a discretization of the visible parts of the real solid object interface given by the reference data RD as

$$\{P_i\}_{i=1}^N$$

with P representing coordinates of the points at which the real solid object interface is formed within the real-world coordinate system, and with i and N each being natural numbers. Thus, the real solid object interface may also be represented as set of points.

Then, the difference from the closest calibration feature OF, i.e., the closest solid object interface 50, 52, 54, 56 in the image 40, to the corresponding extracted reference data RD, i.e., the corresponding second representation of the solid object interface 50, 52, 54, 56, may be given by

$$C_i(\theta) = \min_{j=1,2,\ldots,M} ||\pi(P_i, \theta) - z_j||$$

with $\pi()$ representing a projection function for transferring the real-world coordinates to image coordinates of the image 40, and with the given coarse values of the pose parameter being given as a vector $\theta$. The vector $\theta$ may

comprise the values of all pose parameters of the ego vessel 70, or of a subset of the pose parameters of the ego vessel 70. For example, the vector $\theta$ may comprise the values of the orientation only, e.g., the value of the pitch angle and/or the value of the roll angle only. The vector $\theta$ may be used to define the 3x4 matrix with r- and t-elements, which transform a point in the real world to a point in the camera coordinate system. The point in the camera coordinate system may then be transformed into the image coordinate system with the 3x3 matrix having the camera intrinsic parameters.

The vector $\theta$ may be defined by the following equation:

$$\begin{bmatrix} x \\ y \\ w \end{bmatrix} = \begin{bmatrix} f_x & s & c_x \\ 0 & f_y & c_y \\ 0 & 0 & 1 \end{bmatrix} \begin{bmatrix} r_{11} & r_{12} & r_{13} & t_x \\ r_{21} & r_{22} & r_{23} & t_y \\ r_{31} & r_{32} & r_{33} & t_z \end{bmatrix} \begin{bmatrix} X \\ Y \\ Z \\ 1 \end{bmatrix}$$

with $(X, Y, Z)$ denoting a point in the real world coordinate system, $(x, y, w)$ denoting the corresponding point in the image coordinate system (considering a homogeneous representation), wherein the point $(u, v)$ in the image coordinate system may be obtained by $u=x/w$ and $v= y/w$, with the extrinsic parameters being defined by $(t_x, t_y, t_z)$ denoting a translation between the world coordinate system and the camera coordinate system, with $r_{mn}$ denoting parameters of a rotation between the aforementioned coordinate systems, with the intrinsic parameters being defined by $(f_x, f_y)$ denoting the focal length and $(c_x, c_y)$ denoting the optical center, and with $s$ denoting the skew, wherein the transformation depends on the vector $\theta$. For models that include lens distortion and details related to the aforementioned model, it is referred to "Multiple View Geometry in Computer Vision", second edition, by Richard Hartley and Andrew Zisserman, Cambridge University Press, March 2003, 978-0-521-54051-3.

It has to be mentioned in this context, that it is already known in the art how to project 3D points of the real world on the 2D image 40 using calibration values, e.g., from the preceding reference, i.e. "Multiple View Geometry in Computer Vision", wherein the projection of the real world point on the image for an ideal camera is explained in chapter 6, page 154, and how to correct for the lens distortion is explained in chapter 7, page 191.

In a step S14, the precise pose of the ego vessel 70 may be determined depending on the above difference, e.g. such that the difference is reduced, e.g. minimized. For example, a misfit and/or cost function may be defined as

$$C(\theta) = \sum_{i=1}^{N} (\min\{T, C_i(\theta)\})^m$$

with $m$ being an exponent that could be tuned and that may be 2, for example, and with T being a threshold which may be introduced to upper bound this distance in order to alleviate an influence of outliers. Then, a non-linear optimization algorithm may be used to seek the precise pose that minimize the above cost function, wherein a vector comprising the precise values of the pose parameters may be given as

$$\theta^* = argmin\ C(\theta)$$

From this optimization, a set of improved, in other words precise pose values in the form of the vector $\theta^*$ may be determined, which may be further improved with the next iteration. The minimization of $\theta^*$ may achieves a 2D registration in the image space by finding the precise values of the pose parameters.

Alternatively, the Fréchet distance may be used for determining the difference between the imaged solid object interface and the real solid object interface.

The precise value of the pose parameter may be determined by adjusting the coarse value of the corresponding pose parameter such that the difference is reduced, e.g. minimized. The precise value of the pose parameter may be adjusted until a predetermined condition is fulfilled. In other words, the steps of the above method may be repeatedly carried out until the predetermined condition is fulfilled. For each corresponding loop of the method, a new image 40 may be captured by the camera 24 and received by the system 20, in particular the processing unit 30, the first representation of the corresponding new solid object interface 50, 52, 54, 56 may be determined from the image 40, and the second representation of the corresponding new solid object interface 50, 52, 54, 56 may be determined from the reference data RD. The predetermined condition may be that the difference is smaller than a predetermined difference threshold.

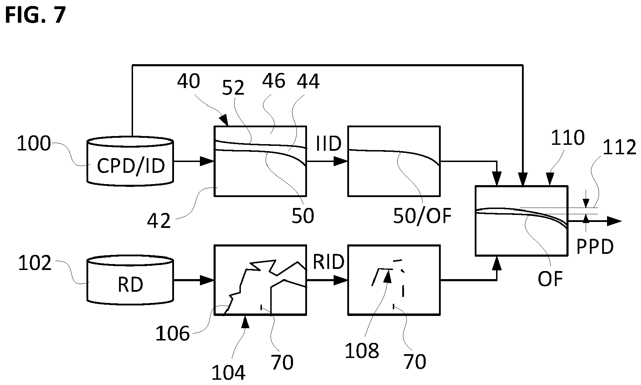

Fig. 7 illustrates a principle of the method for determining the precise value of the pose parameter of the ego vessel 70. The coarse pose data CPD, in particular the coarse position data, may be stored on a memory 100. The memory 100 may be the above-mentioned memory of the system 20. The coarse pose data CPD, in particular the coarse position data, may be determined by the positioning device 22 in advance. The image data ID may be stored in the memory 100 also. Alternatively, the image data ID may be stored in another storage device, e.g., of the system 20 or of an external device communicating with the system 20. The image data ID may be generated by the camera 24 in advance. In case of using the land-water interface 50 for determining the precise value of the pose parameter of the ego vessel 70, the first representation of the land-water interface 50 may be determined from the image 40 and may be used as the orientation feature OF. The reference data RD may be stored in a database 102. The database 102 may be stored on the memory 100 or in another storage device of the system 20 or of an external device, such as e.g., a server of the internet. The database 102 may comprise map data of a 2D map 104. The 2D map 104 shows the land-water interface 50, in particular a coastline 106. Further, the ego vessel 70 is marked in the 2D map 104 for the ease of explanation. The coastline 106, in particular the visible part of the coastline 108 may be extracted from the 2D map 104. Then, the orientation feature OF, in this case the determined first representation, and the second representation of the coastline 106, in particular the visible part of the coastline 108, may be registered in the image space 110, e.g., by the above explained 2D registration in the image space. Then, a difference 112 between the first representation of the land-water interface extracted from the image 40 and the second representation of the land-water interface, e.g., the visible part of the land-water interface 108, extracted from the 2D map 104 may be determined. This difference 112 may be representative for the difference determined by the system 20 and/or by the method explained with respect to figure 6. From this difference 112, the precise value of the pose parameter of the ego vessel 70 may be determined, e.g. by the method explained with respect to figure 6 and/or by the system 20 explained with respect to figure 1.

If the first representation is representative for the land-sky interface 52, the land-sky interface 52 as shown in the image 40 may be used as the orientation feature OF instead of the land-water interface 50 and instead of the 2D map 104 the DEM may be used for determining the corresponding second representation.

If the first representation is representative for the vessel-water interface 54, the vessel-water interface 54 as shown in the image 40 may be used as the orientation feature OF instead of the land-water interface 50 and instead of the 2D map 104 the AIS data may be used for determining the second representation of the corresponding vessel-water interface 54, in particular of the visible vessel-water interface 74.

The neural networks and components mentioned above, e.g. the first neural network, the acquisition component 26, the extracting component 28, and/or the processing unit 30, each may be implemented by software, hardware, or a combination of software and hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processing unit or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| 20 | system |
| 22 | positioning device |
| 24 | camera |
| 26 | acquisition component |
| 28 | extracting component |
| 30 | processing unit |
| 40 | image |
| 42 | water surface |
| 44 | land |
| 46 | sky |
| 48 | other vessel |
| 50 | land-water interface |
| 52 | land-sky interface |
| 54 | vessel-water interface |
| 56 | vessel-sky interface |
| 58 | bounding box |
| 60 | AIS bounding box |
| 62 | GPS receiver |
| 64 | estimated vessel-water interface |
| 70 | ego vessel |
| 72 | field of view |
| 74 | visible vessel-water interface |
| 80 | real world (picture) |
| 84 | non-physical land-water interface |
| 88 | horizon |
| 90 | elevation contour |
| 100 | memory |
| 102 | database |
| 104 | 2D map |
| 106 | coastline |
| 108 | visible part of coastline |
| 110 | image space |
| 112 | difference |
| S2-S14 | steps one to fourteen |
| PPD | precise pose data |
| CPD | coarse pose data |
| ID | image data |
| RD | reference data |
| OF | orientation features |
| WS | width to starboard |
| WP | width to port |
| LB | length to bow |
| LS | length to stern |

**Claims**

**1.**  Method for determining a precise value of at least one pose parameter of an ego vessel (70), on which a camera (24) is arranged, the method comprising:

> receiving image data (ID) of an image (40) captured by the camera (24), the image (40) showing at least one solid object (44, 48) and at least one solid object interface (50, 52, 54, 56) between the solid object (44, 48) and the sky (46), or between the solid object (44, 48) and a water surface (42) of a waterbody, on which the ego vessel (70) sails;
> determining a first representation of the solid object interface (50, 52, 54, 56) from the image data (ID);
> determining a coarse position of the ego vessel (70) at the time at which the image (40) is captured;
> determining reference data (RD) based on the coarse position of the ego vessel (70), the reference data (RD) being representative of the solid object interface (50, 52, 54, 56) in the real world (80);
> determining a second representation of the solid object interface (50, 52, 54, 56) from the reference data (RD);
> determining a difference between the first representation and the second representation; and
> determining the precise value of the pose parameter of the ego vessel (70) depending on the difference.

2. Method in accordance with claim 1, wherein

> the determining of the difference between the first representation and the second representation comprises transferring the first representation and/or the second representation into the same coordinate system, and determining a misfit function between the first representation and the second representation within the coordinate system as the difference; and
> the precise value of the pose parameter of the ego vessel (70) is determined depending on the difference by adjusting a predetermined coarse value of the pose parameter of the ego vessel (70) such that the difference is reduced.

3. Method in accordance with claim 2, wherein the predetermined coarse value of the pose parameter is adjusted such that the misfit function is minimized.

4. Method in accordance with one of the preceding claims, wherein

> a coarse value of at least one orientation parameter of the ego vessel (70) is determined; and
> the reference data (RD) may be determined based on the coarse value of the orientation parameter of the ego vessel (70).

5. Method in accordance with one of the preceding claims, wherein

> the first representation is representative for a pathway of the solid object interface (50, 52, 54, 56) within the image (40); and/or
> the second representation is representative for a pathway of the solid object interface (50, 52, 54, 56) within the real world.

6. Method in accordance with one of the preceding claims, wherein
, when determining the second representation from the reference data (RD), those parts of the solid object interface (50, 52, 54, 56) which were visible from the camera (24) at the time the image (40) was captured are determined as the first representation only.

7. Method in accordance with claim 6, comprising:

> determining a positional relationship between the camera (24) and the solid object interface (50, 52, 54, 56) from the reference data (RD); and
> determining the parts of the solid object interface (50, 52, 54, 56) which are visible from the camera (24) depending on the determined positional relationship.

8. Method in accordance with one of the preceding claims, wherein
the reference data (RD) comprise 2D map data representing a 2D map of surroundings of the ego vessel (70).

9. Method in accordance with claims 7 and 8, wherein the parts of the solid object interface (50, 52, 54, 56) which are visible from the camera (24) are determined from the 2D map data depending on the determined positional relationship between the camera (24) and the solid object interface (50, 52, 54, 56) by ray casting.

10. Method in accordance with one of claims 1 to 7, wherein
the reference data (RD) comprise AIS data relating to at least one other vessel (48) in the waterbody.

11. Method in accordance with claims 7 and 10, wherein

> the AIS data comprise a geo-location of a GPS receiver (62) of the other vessel (48) and an extent (WS, WP, LB, LS) of the other vessel (48) in relation to the geo-location of the GPS receiver (62) of the other vessel (48);

an estimated vessel-water interface (64) between the water surface (42) and the other vessel (48) is estimated from the extent (WS, WP, LB, LS) and the geo-location of the GPS receiver (62) of the other vessel (48);

the parts of the estimated vessel-water interface (64) which are visible from the camera (24) are determined as visible vessel-water interface (74) depending on the estimated vessel-water interface (64) and a position of the camera (24); and

the visible vessel-water interface (74) of the vessel-water interface (64) is used as the second representation.

12. Method in accordance with one of claims 1 to 7, wherein

the reference data (RD) comprise elevation map data of the land (44) abutting on the waterbody.

13. Method in accordance with claims 7 and 12, wherein the parts of the solid object interface (50, 52) which are visible from the camera (24) are determined from the elevation map data by generating a textureless rendered image and by determining the second representation from the textureless rendered image.

14. Method in accordance with one of the preceding claims, wherein

the image (40) shows at least a part of the horizon (88) between the water surface (42) and the sky (46),

a third representation of the horizon (88) is determined from the image data (ID),

the reference data (RD) are representative of the horizon (88) in the real world (80),

a fourth representation of the horizon (88) is determined from the reference data (RD);

a difference between the third representation and the fourth representation is determined; and

the precise value of the pose parameter of the ego vessel (70) is determined depending on the difference.

15. System (20) for determining a precise value of at least one pose parameter of an ego vessel (70), on which a camera (24) is arranged, the system (20) comprising a memory configured for storing image data (ID) of an image (40), coarse position data (CPD) of the ego vessel (70), and/or reference data (RD) and a processing unit which is configured for carrying out the method in accordance with any one of the preceding claims.

**FIG. 1**

**FIG. 2**

EP 4 421 738 A1

**FIG. 3**

**FIG. 4**

**FIG. 5**

**FIG. 6**

**FIG. 7**

Europäisches
Patentamt

European
Patent Office

Office européen
des brevets

# EUROPEAN SEARCH REPORT

Application Number

EP 23 15 8743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRELSSON BERTIL ET AL: "GPS-level accurate camera localization with HorizonNet", JOURNAL OF FIELD ROBOTICS, vol. 37, no. 6, 23 December 2019 (2019-12-23), pages 951-971, XP093067989, US ISSN: 1556-4959, DOI: 10.1002/rob.21929 Retrieved from the Internet: URL:https://onlinelibrary.wiley.com/doi/full-xml/10.1002/rob.21929> * abstract * * Section 1; figure 1 * * Section 3; figures 3,4,5 * * Section 4; figure 14 * * Section 6 * | 1-7, 12-15 | INV. G06T7/73 G01C21/30 G01C21/00 |
| X | FR 3 097 958 A1 (IXBLUE [FR]) 1 January 2021 (2021-01-01) * abstract * * paragraph [0001] - paragraph [0019] * * paragraph [0026] - paragraph [0084]; figures 1-3 * | 1-7, 12-15 | TECHNICAL FIELDS SEARCHED (IPC) G06T G01C |
| X | US 2019/056512 A1 (ONOMURA YOICHI [JP] ET AL) 21 February 2019 (2019-02-21) * abstract; figure 1 * * paragraph [0035] * * paragraph [0049] - paragraph [0057]; figure 5A * * paragraph [0093] * | 1-9,15 | |

-/--

The present search report has been drawn up for all claims

| Place of search | Date of completion of the search | Examiner |
|---|---|---|
| Munich | 1 August 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 15 8743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE JUNG MIN ET AL: "Study on Image-Based Ship Detection for AR Navigation", 2016 6TH INTERNATIONAL CONFERENCE ON IT CONVERGENCE AND SECURITY (ICITCS), IEEE, 26 September 2016 (2016-09-26), pages 1-4, XP032999211, DOI: 10.1109/ICITCS.2016.7740373 [retrieved on 2016-11-09] * abstract * * Section III.; figures 2,6,7 * * Section V.; figure 10 * ----- | 1-7,10, 11,14,15 | |
| A | CN 113 112 540 A (UNIV SOUTHEAST) 13 July 2021 (2021-07-13) * the whole document * ----- | 10,11 | |

TECHNICAL FIELDS
SEARCHED      (IPC)

The present search report has been drawn up for all claims

| Place of search | Date of completion of the search | Examiner |
|---|---|---|
| Munich | 1 August 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 15 8743

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2023

| Patent document cited in search report | | Publication date | Patent family member(s) | | Publication date |
|---|---|---|---|---|---|
| FR 3097958 | A1 | 01-01-2021 | NONE | | |
| US 2019056512 | A1 | 21-02-2019 | JP | 6581629 B2 | 25-09-2019 |
| | | | JP | 2019035670 A | 07-03-2019 |
| | | | US | 2019056512 A1 | 21-02-2019 |
| CN 113112540 | A | 13-07-2021 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22180131 A

**Non-patent literature cited in the description**

- **RICHARD HARTLEY ; ANDREW ZISSERMAN.** Multiple View Geometry in Computer Vision. Cambridge University Press, March 2003